# EUROPÄISCHE PATENTSCHRIFT

(11) **EP 0 634 118 B1**
(45) Veröffentlichungstag und Bekanntmachung des Hinweises auf die Patenterteilung: **17.03.1999**
(21) Anmeldenummer: 94110333.5
(22) Anmeldetag: 04.07.1994
(51) Int. Cl.: A46B 13/00

(54) **Borstenträger für eine Walzenbürste**
Brush body for a rotating brush
Corps porteur de touffes pour une brosse rotative

(30) Priorität: 14.07.1993 DE 9310677 U
(43) Veröffentlichungstag der Anmeldung: 18.01.1995
(73) Patentinhaber: Formex Plastik GmbH, 47623 Kevelaer (DE)
(72) Erfinder: Weynhoven, Heinrich, D-47652 Weeze (DE); Peters, Heinrich-Josef, D-47623 Kevelaer (DE)
(74) Vertreter: Funken, Josef, Dipl.-Ing.

(56) Entgegenhaltungen:
- DE-B- 1 245 899
- GB-A- 385 461
- GB-A- 1 036 953
- US-A- 2 256 983
- US-A- 2 372 933
- US-A- 2 885 705
- US-A- 3 355 758

## Beschreibung

Die Erfindung betrifft einen Borstenträger für eine Walzenbürste, beispielsweise für eine Autowaschanlage, wobei die Borstenträger aus mit Borstenbündeln versehenen Zylinder bildenden Halbschalen bestehen, welche jeweils an ihrem einen Ende eine erste Stirnfläche und an ihrem anderen Ende eine zweite Stirnfläche mit ineinander rastbaren Nuten bzw. Nocken aufweisen und wobei die Halbschalen gegen unbeabsichtigtes Herausfallen gesichert und drehfest miteinander verbunden sind sowie die Halbschalen paarweise drehfest auf der Drehachse der Walzenbürste und koaxial zu dieser angeordnet sind.

Aus der US-A-3 355 758 ist eine Walzenbürste bekannt, die aus mehrere Zylinder bildenden Halbschalen besteht, wobei die die beiden Enden der Halbschalen bildenden Stirnflächen ineinander rastbare Nuten bzw. Nocken aufweisen. Je zwei gegenüberstehend angeordnete und einen Zylinder bildende Halbschalen sind über vier Schrauben miteinander verbunden und drehfest auf der Drehachse angeordnet. Die Halbschalen weisen an beiden Enden je eine Wand auf, wobei in der einen Wand Nuten und in der anderen Wand Nocken vorgesehen sind, und zwar derart, daß die Nocken der einen Wand eine Halbschale in die Nuten der anderen Wand der benachbaren Halbschale einrasten.

Beim Auswechseln von besonders stark abgenutzten Halbschalen müssen somit zunächst vier Schrauben gelöst werden, damit anschließend die Halbschalen von der Drehachse abgenommen und anschließend neue Halbschalen auf die Drehachse aufgesetzt und wieder miteinander durch vier Schrauben verschraubt werden können. Derartige Arbeiten sind sehr zeitaufwendig und unwirtschaftlich.

Diese Walzenbürsten können beispielsweise als Seiten- und Dachbürsten in einer Autowaschanlage eingesetzt und mit einem solchen Abstand zueinander gegenüberliegend angeordnet werden, daß sie zwischen sich ein Fahrzeug aufnehmen.

Eine Walzenbürste besteht im wesentlichen aus einer motorisch intermittierend angetriebenen Antriebswelle, die normalerweise als Rohr ausgebildet ist. Auf der Antriebswelle ist der Borstenträger gelagert, wobei der Borstenträger aus einer Vielzahl von übereinander oder nebeneinander angeordneten Zylindern besteht, die jeweils aus zwei Halbschalen gebildet sind und zur Fixierung eines vorgegebenen Längenmaßes unterschiedliche Längen aufweisen können.

Der Borstenträger ist mit einer Vielzahl von Borstenbündeln besetzt, wobei die Borsten (Filamente) ein- oder mehrfarbig sein können. Auch können die Borstenbündel möglicherweise auf dem Borstenträger derart spiralförmig angeordnet sein, daß je Zylinder eine 180°-Spirale vorgesehen ist. Das bedeutet, daß die Spiralen der unterschiedlichen Farben über die gesamte Höhe der Walzenbürste kontinuierlich verlaufen.

Die Borstenträger, insbesondere diejenigen für den Autowaschbereich, gibt es in unterschiedlichen Versionen und Befestigungsmöglichkeiten. Man unterscheidet im wesentlichen vier Befestigungen.
1. Halbschalen, die jeweils mit vier Schrauben auf einer Welle verankert sind.
2. Halbschalen, die jeweils paarig - gegenüberliegend - durch eine Welle mit zwei Schrauben verschraubt sind.
3. Flexible Borstenträger, die als sogenannte Matten die Welle umschließen und mit Schrauben oder Poppnieten verankert sind.
4. Halbschalen als Stecksysteme mit einer Verzahnung, die so ausgebildet ist, daß an den beiden Seiten einer Halbschale je ein Zahn von 45° Länge vorgesehen ist, zwischen denen eine Zahnlücke von 90° Länge gebildet ist. Dadurch bilden zwei einander zugeordnete Halbschalen zwei einander gegenüberliegende Zähne von 90° Länge und zwei zwischen diesen Zähnen liegende Zahnlücken ebenfalls von 90° Länge. Die jeweils übereinander benachbarten Paare von Halbschalen sind um 180° zueinander gedreht, weil dadurch ein unbeabsichtigtes Herausfallen der Halbschalen aus dem Borstenträger verhindert wird und außerdem die einander in unterschiedlichen Höhen benachbarten Paare von Halbschalen drehfest miteinander verbunden sind. Die Arretierung solcher Halbschalen erfolgt jeweils seitlich mit einem fest auf der Welle verschraubten Arretierungsring.

Bei der Erstmontage oder bei der Auswechselung von besonders stark abgenutzten Halbschalen oder bei einer Erstbestückung müssen entweder Schrauben oder Poppnieten gelöst oder aber bei der Version gemäß 4. diese Halbschalen im geschlossenen Zustand hochgeschoben werden, um erst dann ausgewechselt werden zu können. Derartige Arbeiten sind sehr zeitaufwendig und unwirtschaftlich.

Der Erfindung liegt die Aufgabe zugrunde, einen Borstenträger der einleitend genannten Art so auszubilden, daß die Halbschalen ohne Verschraubung auf der Drehachse zu befestigen sind.

Diese Aufgabe wird erfindungsgemäß dadurch gelöst, daß je zwei einen Zylinder bildende Halbschalen an ihren inneren Rändern gelenkig miteinander verbunden und um einen vorbestimmten Betrag zwischen Offen- und Schließstellung gegeneinander schwenkbar sind, daß in den ersten Stirnflächen der beiden Halbschalen Nuten vorgesehen sind, deren Seitenwände von Kreiszylinderflächen mit der Schwenkachse als Mittelachse gebildet sind und daß in den zweiten Stirnflächen der beiden Halbschalen Nocken vorgesehen sind, deren Seitenwände von den gleichen Kreiszylinderflächen gebildet sind wie die Seitenwände der Nuten in den ersten Stirnflächen der beiden Halbschalen.

Auf diese Weise gelangt man zu einem Borstenträger bzw. zu einer Walzenbürste, bei der durch Reparaturen bedingte Auswechselungen der Halbschalen ohne weiteres möglich sind, wobei die oberhalb und unterhalb der auszuwechselnden Halbschalen befindlichen Halbschalen unverändert an ihrer Stelle bleiben können. Das bedeutet, daß das Paar auszuwechselnder Halbschalen aus der Walzenbürste herausgenommen wird und ein neues Paar von Halbschalen an diese Stelle gesetzt wird. Das bedeutet einen wesentlich geringeren Arbeitsaufwand. Somit werden die an Walzenbürsten bzw. Borstenträgern von Autowaschanlagen in relativ kurzen Zeitabständen erforderlichen Reparaturen und Auswechselarbeiten erheblich minimiert.

Zweckmäßig sind die zwei Halbschalen an ihren beiden äußeren Rändern in der Schließstellung miteinander verriegelbar und entriegelbar.

In weiterer Ausgestaltung der Erfindung kann vorgesehen sein, daß die gelenkige Verbindung der beiden Halbschalen miteinander als Drehgelenk ausgebildet ist, das aus an den inneren Rändern der beiden Halbschalen in der Höhe versetzt angeordneten Lagervorsprüngen und entsprechenden Rücksprüngen zur Aufnahme der jeweils gegenüber liegenden Lagervorsprünge gebildet ist, wobei die Lagervorsprünge eine Gelenkbohrung aufweisen, durch die eine Gelenkachse geführt ist.

Zweckmäßig sind die äußeren Ränder der beiden Halbschalen jeweils gegeneinander versetzt Vorsprünge und Rücksprünge aufweisen, wobei in den Vorsprüngen eine Verriegelungsbohrung vorgesehen ist, in die ein Verriegelungsstift einzusetzen und aus der der Verriegelungsstift wieder herauszunehmen ist.

Des weiteren empfiehlt sich, daß die äußeren Ränder der beiden Halbschalen nach Art von Nut und Feder miteinander verzapft sind.

In weiterer Ausgestaltung der Erfindung kann vorgesehen sein, daß in den nach oben orientierten Stirnflächen der beiden Halbschalen zwei bis vier, insbesondere drei Nuten und daß in den nach unten orientierten Stirnflächen der beiden Halbschalen zwei bis vier, insbesondere drei entsprechende Nocken vorgesehen sind.

Es empfiehlt sich, den Borstenträger so auszubilden, daß die beiden Halbschalen um die Schwenkachse der inneren Ränder soweit zu öffnen sind, daß die beiden Halbschalen im am weitesten geöffneten Zustand mit dem erforderlichen Bewegungsspiel auf die Drehachse bzw. auf einen auf der Drehachse vorgesehenen Distanzierungskern zu schieben sind.

Außerdem kann die Walzenbürste aus einer Mehrzahl gleicher Halbschalen mit den in den Patentansprüchen definierten Merkmalen gebildet sein.

Des weiteren empfiehlt es sich, daß die die Walzenbürste bildenden Halbschalen mit einer Vielzahl von Borstenbündeln versehen sind.

Borstenbündel unterschiedlicher Farben können spiralförmig auf den Halbschalen derart angeordnet sein, daß je Halbschale der Spiralenbereich einer halben Spiralwindung vorgesehen ist.

Die einzelnen Halbschalen können unterschiedlich farbig mit Borstenbündeln besetzt sein.

Zweckmäßig sind die Borsten (Monofile) gegen farbige Textilbündel auswechselbar.

Die Halbschalen können mit Textilfäden ausgerüstet oder mit Textillappen besetzt sein. Dabei kann der textile Besatz auf den Halbschalen farbig unterschiedlich angeordnet sein.

Des weiteren empfiehlt es sich, daß die Halbschalen mit tierischem Besatz, wie beispielsweise Haaren oder Borsten besetzt sind.

Die Halbschalen können mit Besatz pflanzlichen Ursprunges oder mit Besatz aus metallischen Borsten ausgerüstet sein.

Zweckmäßig kann vorgesehen sein, daß die beiden Halbschalen aus Polypropylen, Poyäthylen oder einem anderen thermoplastischen Kunststoff bestehen.

Des weiteren empfiehlt es sich, daß der auf der Drehachse drehfest angeordnete Distanzierungskern zur Aufnahme der Halbschalen aus Metall oder einem thermoplastischen Kunststoff besteht.

Nachfolgend wird die Erfindung anhand eines Ausführungsbeispieles des näheren erläutert. Es zeigt
- Fig. 1: eine Seitenansicht auf eine erfindungsgemäß ausgebildete Walzenbürste,
- Fig. 2: eine perspektivische Darstellung zweier einander zugeordneten Halbschalen im geöffneten Zustand,
- Fig. 3: eine Ansicht auf die nach oben orientierten Stirnflächen zweier einander zugeordneten Halbschalen,
- Fig. 4: eine Ansicht auf die nach unten orientierten Stirnflächen der beiden einander zugeordneten Halbschalen, jedoch von oben her und
- Fig. 5: eine Ansicht auf die nach oben orientierten Stirnflächen zweier einander zugeordneten Halbschalen im geschlossenen Zustand und im geöffneten Zustand.

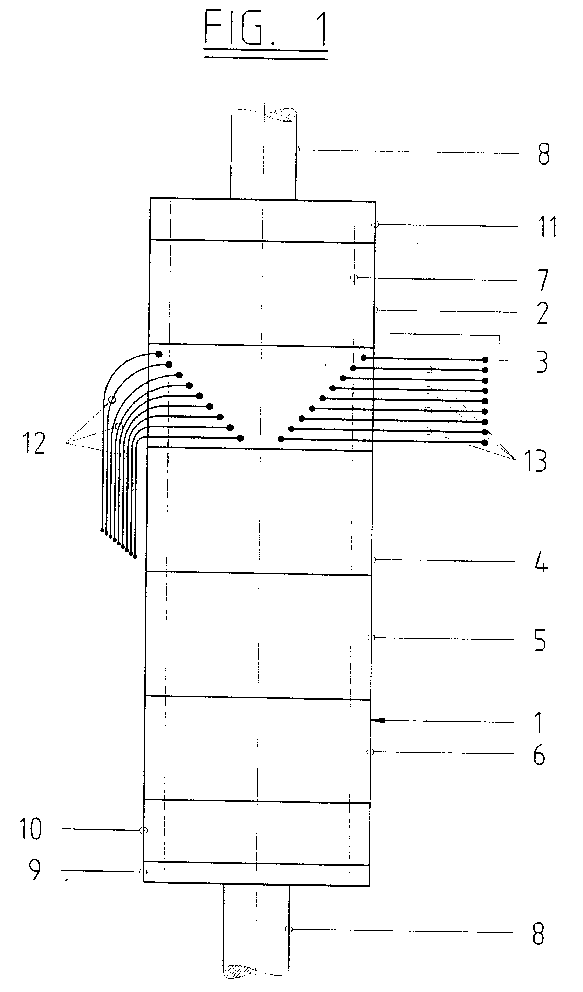

Der in Figur 1 dargestellte Walzenmantel 1 besteht aus Zylindern 2,3,4,5,6, die auf einem Distanzierungskern 7 angeordnet sind. Der Distanzierungskern 7 ist mit einer Drehachse 8 drehfest verbunden.

Auf der Drehachse 8 ist eine Antriebsscheibe 9 vorgesehen, die drehfest mit einer Antriebsschale 10 verbunden ist. Letztere ist über eine in Figur 1 im einzelnen nicht dargestellte, weiter unten beschriebene Verzahnung mit dem untersten Zylinder 6 verbunden. Auf dem obersten Zylinder 7 ist eine der Antriebsschale 10 entsprechende Halteschale 11 vorgesehen. An dem Zylinder 3 sind links Borstenbündel 12 im Ruhezustand und auf der gegenüberliegenden Seite Borstenbündel 13 im Arbeitszustand dargestellt, als Beispiel für die Verwendung in einer Autowaschanlage.

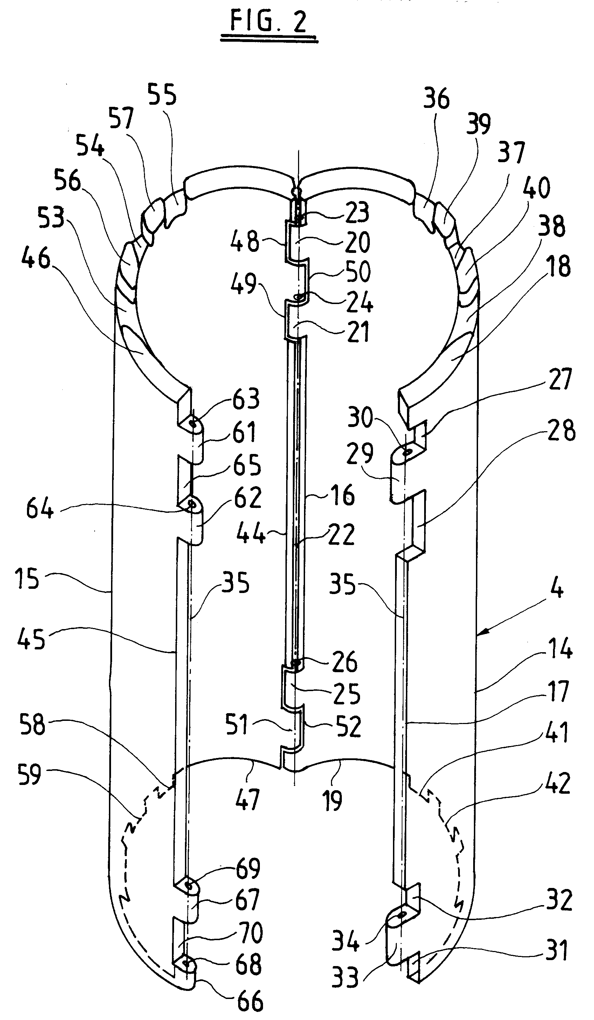

In Figur 2 ist der mittlere Zylinder 4 in perspektivischer Darstellung gezeigt, in dem die beiden den Zylinder 4 bildenden Halbschalen 14 und 15 aufgeschwenkt sind. Die Halbschale 14 ist kreiszylindrisch ausgebildet und erstreckt sich über einen Bereich von 180°. Die Halbschale 14 ist nach innen hin von dem inneren Rand 16 und nach außen von dem äußeren Rand 17 sowie oben von der oberen Stirnfläche 18 und unten von der unteren Stirnfläche 19 gebildet. Am inneren Rand 16 sind im oberen Bereich zwei Lagervorsprünge 20,21 mit zwei auf der Drehachse 22 angeordneten Bohrungen 23,24. Im unteren Bereich ist ein Lagervorsprung 25 mit einer Bohrung 26 vorgesehen, die ebenfalls auf der Schwingachse 22 liegt.

Am äußeren Rand der Halbschale 14 sind im oberen Bereich zwei Rücksprünge 27,28 vorgesehen, zwischen denen ein Verriegelungsvorsprung 29 mit einer senkrecht angeordneten Bohrung 30 angeordnet ist. Im unteren Bereich ist zwischen einem unteren Rücksprung 31 und einem oberen Rücksprung 32 ein Verriegelungsvorsprung 33 mit einer Bohrung 34 vorgesehen. Die Bohrungen 30 und 34 liegen auf einer gemeinsamen Verriegelungsachse 35.

In der oberen Stirnfläche 18 sind drei Nuten 36,37,38 vorgesehen, zwischen denen sich zwei Nocken 39,40 befinden. In der unteren Stirnfläche 19 sind drei Nocken 41,42,43 vorgesehen, die so positioniert sind, daß sie den drei Nuten 36,37,38 genau gegenüberliegen und somit in die entsprechenden Nuten einer unterhalb der Halbschale 14 angeordneten entsprechenden gleichen Halbschale, die in Figur 2 nicht dargestellt ist, passen.

Die in Figur 2 links dargestellte Halbschale 15 wird begrenzt von dem inneren Rand 44 und dem äußeren Rand 45 sowie der oberen Stirnfläche 46 und der unteren Stirnfläche 47. Der innere Rand 44 weist zwischen zwei Rücksprüngen 48,49 einen Lagervorsprung 50 auf, der in nicht sichtbarer Weise eine auf der Drehachse 22 liegende Bohrung aufweist, so daß diese nicht sichtbare Bohrung mit den Bohrungen 23,24 fluchtet. Durch diese Bohrungen ist ein in dieser Darstellung nicht sichtbarer Schwenkbolzen gesteckt.

Im unteren Bereich ist ein Vorsprung 51 vorgesehen, der in den Rücksprung 52 hineinragt. Der Lagervorsprung 51 hat eine in dieser Darstellung nicht sichtbare Bohrung, die auf der Gelenkachse 22 liegt und daher mit der Bohrung 26 fluchtet. Durch diese nicht sichtbare Bohrung und die Bohrung 26 ist ebenfalls ein Lagerstift gesteckt, so daß die beiden Halbschalen 14 und 15 gegeneinander schwenkbar sind, insbesondere in die in Figur 2 dargestellte Position zu öffnen und auch in die nicht dargestellte Schließposition zu bringen ist.

In der oberen Stirnfläche 46 sind drei Nuten 53,54,55 vorgesehen, zwischen denen zwei Nocken 56,57 stehen. In der unteren Stirnfläche 47 sind Nocken 58,59,60 vorgesehen, die so positioniert sind, daß sie den Nuten 53,54,55 der oberen Stirnfläche 46 genau gegenüberliegen und in entsprechende Nuten einer in Figur 2 nicht dargestellten unter der Halbschale 15 angeordneten gleichen Halbschale hineinragen würden.

Am äußeren Rand 45 der linken Halbschale 15 sind im oberen Bereich zwei Lagervorsprünge 61, 62 vorgesehen, in denen Bohrungen 63,64 angeordnet sind, die auf der Verriegelungsachse 35 liegen. Zwischen den beiden Lagervorsprüngen 61,62 ist eine Ausnehmung 65 vorgesehen. Im unteren Bereich der linken Halbschale 15 sind Lagervorsprünge 66,67 mit Bohrungen 68,69, die auf der Verriegelungsachse 35 liegen. Zwischen den beiden Lagervorsprüngen 66,67 ist ein Rücksprung 70 vorgesehen.

Im geschlossenen Zustand der beiden Halbschalen 14,15 ragt der Lagervorsprung 29 der rechten Halbschale 14 in die Ausnehmung 65 der linken Halbschale 15 so, daß die Bohrung 30 des Lagervorsprunges 29 mit den Bohrungen 63,64 der Lagervorsprünge 61,62 fluchtet, indem die Bohrungen 30,63,64 auf der gemeinsamen Verriegelungsachse 35 liegen. Desgleichen ragt der untere Lagervorsprung 33 der rechten Halbschale 14 im geschlossenen Zustand in den Rücksprung 70 zwischen den beiden Lagervorsprüngen 66,67, wobei die Bohrung 34 des Lagervorsprunges 33 mit den Bohrungen 68,69 der Lagervorsprünge 66,67 fluchtet, indem diese Bohrungen auf der gemeinsamen Verriegelungsachse 35 liegen.

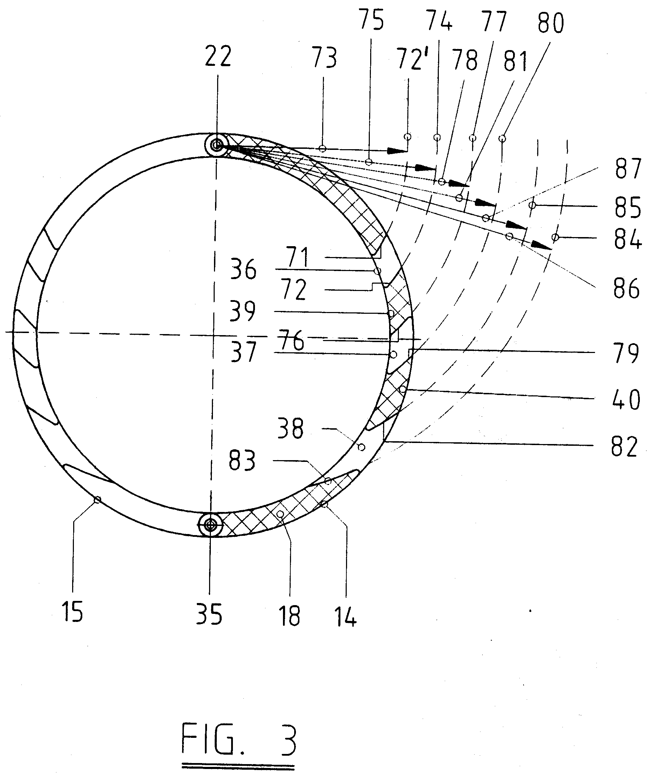

Figur 3 zeigt eine Draufsicht auf die beiden Halbschalen 14,15 im geschlossenen Zustand, in dem sie um die Drehachse jeweils nach innen hin geschwenkt sind und auf der Verriegelungsachse 35 verriegelt sind. Auf der oberen Stirnfläche 18 der Halbschale 14 sind die drei Nuten 36,37,38 vorgesehen, zwischen denen die Nocken 39,40 stehen. Die innere Wand 71 der Nut 36 liegt auf dem Kreisbogen 72 mit dem Radius 73 um die Drehachse 22. Desgleichen liegt die äußere Wand 72 der Nut 36 auf dem Kreisbogen 74 mit dem Radius 75 um die Schwenkachse 22.

Ähnliches gilt auch für die Nut 37, deren innere Wand 76 auf einem Kreisbogen 77 mit dem Radius 78 um die Drehachse 22 liegt, während die andere Wand 79 der Nut 37 auf dem Kreisbogen 80 mit dem Radius 81 um die Drehachse 22 liegt. Vergleichbares gilt auch für die Wände 82,83 der Nut 38 bezüglich der Kreisbögen 84,85 und der Radien 86,87 um die Schwenkachse 22.

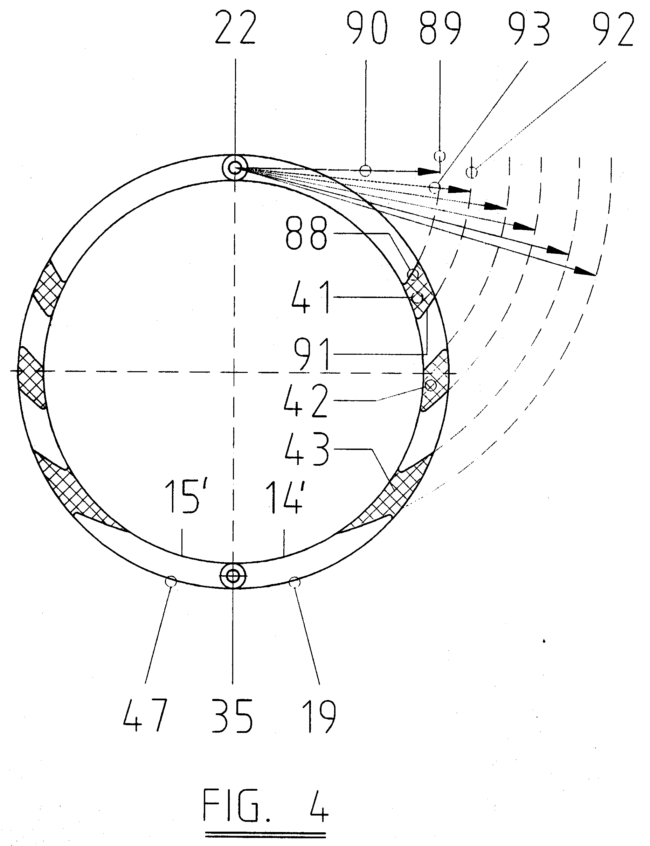

In Figur 4 ist eine Ansicht auf die nach unten orientierten Stirnflächen 19,47 der Halbschalen 14,15 gezeigt, allerdings nicht von unten her gegen die Stirnflächen 19,47 sondern von oben her gegen die Stirnflächen 19,47, weil dadurch deutlich sichtbar ist, wie die Nuten der nach oben gerichteten Stirnflächen mit den Nocken der nach unten gerichteten Stirnflächen zusammenwirken.

Der Nocken 41 ist so angeordnet, daß seine innere Wand 88 auf dem Kreisbogen 89 mit dem Radius 90 um die Schwenkachse 22 liegt, während die andere Wand 91 des Nockens 41 auf dem Kreisbogen 92 mit dem Radius 93 um die Schwenkachse 22 liegt. Vergleichbares gilt auch, ohne es im einzelnen zu beschreiben, für die beiden anderen Nocken 42,43, deren jeweils beide Wände auf jeweils zwei entsprechenden Kreisbögen mit entsprechenden Radien um die Schwenkachse 22 angeordnet sind.

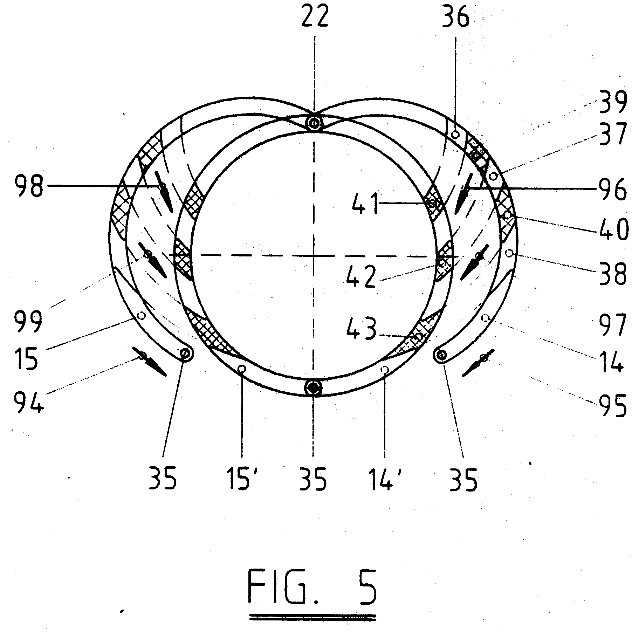

In Figur 5 ist dargestellt, wie ein geöffnetes Halbschalenpaar 14,15 gegenüber einem geschlossenen Halbschalenpaar 14',15' geschlossen wird. Wenn das untere Halbschalenpaar 14',15' geschlossen ist, wird das obere Halbschalenpaar 14,15 so auf dem unteren Halbschalenpaar 14'.15' aufgesetzt, daß die Schwenkachse 22 beider Halbschalenpaare 14',15' und 14,15 miteinander fluchten. Anschließend wird das obere Halbschalenpaar 14,15 in Richtung der Pfeile 94,95 geschlossen. Bei dem durch das Schließen bedingten Bewegungsvorgang bewegen sich die drei Nuten 36,37,38 sowie die entsprechenden im einzelnen nicht bezifferten Nuten der linken oberen Halbschale 15 in Richtung der Pfeile 96,97 bzw. 98,99 gegen die Nocken 41,42,43 und nehmen diese im geschlossenen Zustand auf. Das gleiche gilt auch für die in Figur 5 links dargestellten Seiten der oberen Halbschale 15 und der unteren Halbschale 15'. In dem geschlossenen Zustand liegen die beiden Verriegelungsachsen 35 der rechten Halbschale 14 und die Verriegelungsachse 35 der linken Halbschale 15 übereinander bzw. fluchten miteinander und stellen die gemeinsame Verriegelungsachse 35 dar.

## Patentansprüche

1. Borstenträger für eine Walzenbürste, beispielsweise für eine Autowaschanlage, wobei die Borstenträger aus mit Borstenbündeln (12,13) versehenen Zylinder (2,3,4,5,6) bildenden Halbschalen (14,15) bestehen, welche jeweils an ihrem einen Ende eine erste Stirnfläche (18,46) und an ihrem anderen Ende eine zweite Stirnfläche (19,47) mit ineinander rastbaren Nuten (36,37,38,53,54,55) bzw. Nocken (41,42,43,58,59,60) aufweisen wobei die Halbschalen durch diese Nuten bzw. Nocken gegen unbeabsichtigtes Herausfallen gesichert und drehfest miteinander verbindbar sind und wobei die Halbschalen (14, 15) paarweise drehfest auf der Drehachse (8) der Walzenbürste und koaxial zu dieser angeordnet sind, **dadurch gekennzeichnet**, daß je zwei einen Zylinder (2,3,4,5,6) bildende Halbschalen (14,15) an ihren inneren Rändern (16,44) gelenkig miteinander verbunden und um einen vorbestimmten Betrag zwischen Offen- und Schließstellung gegeneinander schwenkbar sind, daß in den ersten Stirnflächen (18,46) der beiden Halbschalen (14,15) Nuten (36,37,38,53,54,55) vorgesehen sind, deren Seitenwände (71,72,76,79,82,83) von Kreiszylinderflächen (72',74,77,80,84,85) mit der Schwenkachse (22) als Mittelachse gebildet sind und daß in den zweiten Stirnflächen (19,47) der beiden Halbschalen (14,15) Nocken (41,42,43,58,59,60) vorgesehen sind, deren Seitenwände (88,91) von den gleichen Kreiszylinderflächen (72',74,77,80,84,85) gebildet sind wie die Seitenwände (71,72,76,79,82,83) der Nuten (36,37,38,53,54,55) in den ersten Stirnflächen (18,46) der beiden Halbschalen (14,15).

2. Borstenträger nach Anspruch 1, dadurch gekennzeichnet, daß die zwei Halbschalen (14,15) an ihren beiden äußeren Rändern (17,45) in der Schließstellung miteinander verriegelbar und entriegelbar sind.

3. Borstenträger nach Anspruch 1 oder 2, dadurch gekennzeichnet, daß die gelenkige Verbindung der beiden Halbschalen (14,15) miteinander als Drehgelenk ausgebildet ist, das aus an den inneren Rändern (16,44) der beiden Halbschalen (14,15) in der Höhe versetzt angeordneten Lagervorsprüngen (20,21,25,50,51) und entsprechenden Rücksprüngen (48,49,52) zur Aufnahme der jeweils gegenüber liegenden Lagervorsprünge (20,21,25,50,51) gebildet ist, wobei die Lagervorsprünge (20,21,25,50,51) eine Gelenkbohrung (23,24,26) aufweisen, durch die eine Gelenkachse geführt ist.

4. Borstenträger nach einem der vorhergehenden Ansprüche, dadurch gekennzeichnet, daß die äußeren Ränder (17,45) der beiden Halbschalen (14,15) jeweils gegeneinander versetzt Vorsprünge (29,33,61,62,66,67) und Rücksprünge (27,28,31,32) aufweisen, wobei in den Vorsprüngen (29,33,61,62,66,67) eine Verriegelungsbohrung (33,34,63,64,68,69) vorgesehen ist, in die ein Verriegelungsstift einzusetzen und aus der der Verriegelungsstift wieder herauszunehmen ist.

5. Borstenträger nach Anspruch 4, dadurch gekennzeichnet, daß die äußeren Ränder (17,45) der beiden Halbschalen (14,15) nach Art von Nut und Feder miteinander verzapft sind.

6. Borstenträger nach einem der vorhergehenden Ansprüche, dadurch gekennzeichnet, daß in den oberen Stirnflächen (18,46) der beiden Halbschalen (14,15) zwei bis vier, insbesondere drei Nuten (36,37,38,53,54,55) und daß in den zweiten Stirnflächen (19,47) der beiden Halbschalen (14,15) zwei bis vier, insbesondere drei entsprechende Nocken (41,42,43,58,59,60) vorgesehen sind.

7. Borstenträger nach einem der vorhergehenden Ansprüche, dadurch gekennzeichnet, daß die beiden Halbschalen (14,15) um die Schwenkachse (22) der inneren Ränder (16,44) soweit zu öffnen sind, daß die beiden Halbschalen (14,15) im am weitesten geöffneten Zustand mit dem erforderlichen Bewegungsspiel auf die Drehachse (8) bzw. auf einen auf der Drehachse (8) vorgesehenen Distanzierungskern (7) zu schieben sind.

8. Borstenträger nach einem der vorhergehenden Ansprüche, dadurch gekennzeichnet, daß die Walzenbürste aus einer Mehrzahl gleicher Halbschalen (14,15) mit den in den vorstehenden Patentansprüchen definierten Merkmalen gebildet ist.

9. Borstenträger nach einem der vorhergehenden Ansprüche, dadurch gekennzeichnet, daß die die Walzenbürste bildenden Halbschalen mit einer Vielzahl von Borstenbündeln (12,13) versehen sind.

10. Borstenträger nach einem der vorhergehenden Ansprüche, dadurch gekennzeichnet, daß Borstenbündel (12,13) unterschiedlicher Farbe spiralförmig auf den Halbschalen (14,15) derart angeordnet sind, daß je Halbschale (14,15) der Spiralenbereich einer halben Spiralwindung vorgesehen ist.

11. Borstenträger nach einem der vorhergehenden Ansprüche, dadurch gekennzeichnet, daß die einzelnen Halbschalen (14,15) unterschiedlich farblich mit Borstenbündeln (12,13) besetzt sind.

12. Borstenträger nach einem der vorhergehenden Ansprüche, dadurch gekennzeichnet, daß die Borsten (Monofile) gegen farbige Textilbündel auswechselbar sind.

13. Borstenträger nach einem der vorhergehenden Ansprüche, dadurch gekennzeichnet, daß die Halbschalen (14,15) mit Textilfäden ausgerüstet sind.

14. Borstenträger nach einem der vorhergehenden Ansprüche, dadurch gekennzeichnet, daß die Halbschalen (14,15) mit Textillappen besetzt sind.

15. Borstenträger nach einem der vorhergehenden Ansprüche, dadurch gekennzeichnet, daß der textile Besatz auf den Halbschalen (14,15) farblich unterschiedlich angeordnet ist.

16. Borstenträger nach einem der vorhergehenden Ansprüche, dadurch gekennzeichnet daß die Halbschalen (14,15) mit tierischem Besatz, wie beispielsweise Haaren oder Borsten besetzt sind.

17. Borstenträger nach einem der vorhergehenden Ansprüche, dadurch gekennzeichnet, daß die Halbschalen (14,15) mit Besatz pflanzlichen Ursprungs ausgerüstet sind.

18. Borstenträger nach einem der vorhergehenden Ansprüche, dadurch gekennzeichnet, daß die Halbschalen (14,15) mit Besatz aus metallischen Borsten ausgerüstet sind.

19. Borstenträger nach einem der vorhergehenden Ansprüche, dadurch gekennzeichnet, daß die beiden Halbschalen (14,15) aus Polypropylen, Poyäthylen oder einem anderen themoplastischen Kunststoff bestehen.

20. Borstenträger nach einem der vorhergehenden Ansprüche, dadurch gekennzeichnet, daß der auf der Drehachse (8) drehfest angeordnete Distanzierungskern (7) zur Aufnahme der Halbschalen (14,15) aus Metall oder einem thermoplastischen Kunststoff besteht.

## Claims

1. A bristle carrier for a rotary brush, for example for a car washing installation, wherein the bristle carriers comprise half-shell portions (14, 15) which form cylinders (2, 3, 4, 5, 6) provided with arrays of bristles (12, 13) and which each have at their one end a first end face (18, 46) and at their other end a second end face (19, 47) with interengageable grooves (36, 37, 38, 53, 54, 55) and projections (41, 42, 43, 58, 59, 60 respectively), wherein by virtue of said grooves and projections respectively the half-shell portions are prevented from accidentally falling out and can be non-rotatably connected together and wherein the half-shell portions (14, 15) are arranged in pairs non-rotatably on the rotary shaft (8) of the rotary brush and coaxially with respect thereto, characterised in that each two half-shell portions (14, 15) forming a respective cylinder (2, 3, 4, 5, 6) are hingedly connected to each other at their inner edges (16, 44) and are pivotable relative to each other by a predetermined amount between an open and a closed position, that provided in the first end faces (18, 46) of the two half-shell portions (14, 15) are grooves (36, 37, 38, 53, 54, 55) whose side walls (71, 72, 76, 79, 82, 83) are formed by surfaces (72', 74, 77, 80, 84, 85) of circular cylinders with the pivot axis (22) as the central axis, and that provided in the second end faces (19, 47) of the two half-shell portions (14, 15) are projections (41, 42, 43, 58, 59, 60) whose side walls (88, 91) are formed by the same surfaces (72', 74, 77, 80, 84, 85) of circular cylinders as the side walls (71, 72, 76, 79, 82, 83) of the grooves (36, 37, 38, 53, 54, 55) in the first end faces (18, 46) of the two half-shell portions (14, 15).

2. A bristle carrier according to claim 1 characterised in that the two half-shell portions (14, 15) are lockable to each other in the closed position at their two outer edges (17, 45) and are unlockable.

3. A bristle carrier according to claim 1 or claim 2 characterised in that the hinged connection of the two half-shell portions (14, 15) to each other is in the form of a rotary hinge which is formed from mounting projections (20, 21, 25, 50, 51) arranged in displaced relationship in respect of height at the inner edges (16, 44) of the two half-shell portions (14, 15), and corresponding recesses (48, 49, 52) for receiving the respective oppositely disposed mounting projections (20, 21, 25, 50, 51), wherein the mounting projections (20, 21, 25, 50, 51) have a hinge bore (23, 24, 26) through which a hinge spindle is passed.

4. A bristle carrier according to one of the preceding claims characterised in that the outer edges (17, 45) of the two half-shell portions (14, 15) respectively have in mutually displaced relationship projections (29, 33, 61, 62, 66, 67) and recesses (27, 28, 31, 32), wherein provided in the projections (29, 33, 61, 62, 66, 67) is a locking bore (33, 34, 63, 64, 68, 69) into which a locking pin is to be fitted and from which the locking pin is to be removed again.

5. A bristle carrier according to claim 4 characterised in that the outer edges (17, 45) of the two half-shell portions (14, 15) are joined to each other in the manner of a mortice and tenon.

6. A bristle carrier according to one of the preceding claims characterised in that two to four and in particular three grooves (36, 37, 38, 53, 54, 55) are provided in the upper end faces (18, 46) of the two half-shell portions (14, 15) and that two to four and in particular three corresponding projections (41, 42, 43, 58, 59, 60) are provided in the second end faces (19, 47) of the two half-shell portions (14, 15).

7. A bristle carrier according to one of the preceding claims characterised in that the two half-shell portions (14, 15) are to be opened about the pivot axis (22) of the inner edges (16, 44) to such an extent that the two half-shell poritons (14, 15) in the most widely opened condition are to be pushed with the required motion clearance on to the rotary shaft (8) or on to a spacer core (7) provided on the rotary shaft (8).

8. A bristle carrier according to one of the preceding claims characterised in that the rotary brush is formed from a plurality of identical half-shell portions (14, 15) having the features defined in the preceding claims.

9. A bristle carrier according to one of the preceding claims characterised in that the half-shell portions forming the rotary brush are provided with a plurality of bristle arrays (12, 13).

10. A bristle carrier according to one of the preceding claims characterised in that bristle arrays (12, 14) of different colours are arranged spirally on the half-shell portions (14, 15) in such a way that the spiral region of half a spiral winding is provided per half-shell portion (14, 15).

11. A bristle carrier according to one of the preceding claims characterised in that the individual half-shell portions (14, 15) are occupied with bristle arrays (12, 13) in different colours.

12. A bristle carrier according to one of the preceding claims characterised in that the bristles (monofilaments) are replaceable by coloured textile arrays.

13. A bristle carrier according to one of the preceding claims characterised in that the half-shell portions (14, 15) are provided with textile threads.

14. A bristle carrier according to one of the preceding claims characterised in that the half-shell portions (14, 15) are occupied by textile flaps.

15. A bristle carrier according to one of the preceding claims characterised in that the textile covering arrangement is disposed on the half-shell portions (14, 15) in different colours.

16. A bristle carrier according to one of the preceding claims characterised in that the half-shell portions (14, 15) are occupied by an animal covering arrangement such as for example hairs or bristles.

17. A bristle carrier according to one of the preceding claims characterised in that the half-shell portions (14, 15) are provided with a covering arrangement of vegetable origin.

18. A bristle carrier according to one of the preceding claims characterised in that the half-shell portions (14, 15) are provided with a covering arrangement comprising metal bristles.

19. A bristle carrier according to one of the preceding claims characterised in that the two half-shell portions (14, 15) comprise polypropylene, polyethylene or another thermoplastic material.

20. A bristle carrier according to one of the preceding claims characterised in that the spacer core (7) non-rotatably arranged on the rotary shaft (8) for receiving the half-shell portions (14, 15) comprises metal or a thermoplastic material.

## Revendications

1. Corps porte-poils pour une brosse rotative, par exemple pour une installation de lavage de voitures, les corps porte-poils étant constitués de demi-coques (14, 15) qui forment des cylindres (2, 3, 4, 5, 6) garnis de touffes de poils (12, 13) et qui, à l'une de leurs extrémités, présentent une première face frontale (18, 46) et, à leur autre extrémité, une seconde face frontale (19, 47) pourvues respectivement de rainures (36, 37, 38, 53, 54, 55) et de dents (41, 42, 43, 58, 59, 60) emboîtables les unes dans les autres, lesdites rainures et, respectivement, dents empêchant les demi-coques de s'échapper accidentellement et permettant de les solidariser en rotation les unes aux autres, et les demi-coques (14, 15) étant montées par paires de manière solidaire en rotation sur l'axe de rotation (8) de la brosse rotative et coaxialement à celui-ci, caractérisé en ce que les deux demi-coques (14, 15) formant chaque cylindre (2, 3, 4, 5, 6) sont reliées entre elles de manière articulée au niveau de leurs bords intérieurs (16, 44) et peuvent pivoter l'une par rapport à l'autre d'une valeur prédéterminée entre des positions ouverte et fermée, en ce que, dans les premières faces frontales (18, 46) des deux demi-coques (14, 15), sont prévues des rainures (36, 37, 38, 53, 54, 55) dont les parois latérales (71, 72, 76, 79, 82, 83) sont formées par des surfaces cylindriques circulaires (72', 74, 77, 80, 84, 85) ayant pour axe central l'axe de pivotement (22), et en ce que, dans les secondes faces frontales (19, 47) des deux demi-coques (14, 15), sont prévues des dents (41, 42, 43, 58, 59, 60) dont les parois latérales (88, 91) sont formées par les mêmes surfaces cylindriques circulaires (72', 74, 77, 80, 84, 85) que celles des parois latérales (71, 72, 76, 79, 82, 83) des rainures (36, 37, 38, 53, 54, 55) ménagées dans les premières faces frontales (18, 46) des deux demi-coques (14, 15).

2. Corps porte-poils selon la revendication 1, caractérisé en ce que les deux demi-coques (14, 15) peuvent être verrouillées entre elles en position fermée et déverrouillées au niveau de leurs deux bords extérieurs (17, 45).

3. Corps porte-poils selon la revendication 1 ou 2, caractérisé en ce que la liaison articulée des deux demi-coques (14, 15) entre elles est conçue sous la forme d'une articulation tournante qui est formée par des parties porteuses en saillie (20, 21, 25, 50, 51) disposées avec un décalage en hauteur sur les bords intérieurs (16, 44) des deux demi-coques (14, 15) et par des parties en retrait correspondantes (48, 49, 52) destinées à recevoir les parties porteuses en saillie (20, 21, 25, 50, 51) situées en vis-à-vis, les parties porteuses en saillie (20, 21, 25, 50, 51) étant pourvues d'un orifice d'articulation (23, 24, 26) à travers lequel passe un axe d'articulation.

4. Corps porte-poils selon une des revendications précédentes, caractérisé en ce que les bords extérieurs (17, 45) des deux demi-coques (14, 15) présentent des parties en saillie (29, 33, 61, 62, 66, 67) et des parties en retrait (27, 28, 31, 32) qui sont décalées les unes par rapport aux autres, les parties en saillie (29, 33, 61, 62, 66, 67) étant pourvues d'un orifice de verrouillage (33, 34, 63, 64, 68, 69) dans lequel une tige de verrouillage peut être insérée et duquel la tige de verrouillage peut être ressortie.

5. Corps porte-poils selon la revendication 4, caractérisé en ce que les bords extérieurs (17, 45) des deux demi-coques (14, 15) sont réunis à la façon d'un assemblage par rainure et languette.

6. Corps porte-poils selon une des revendications précédentes, caractérisé en ce qu'il est prévu, dans les faces frontales supérieures (18, 46) des deux demi-coques (14, 15), deux à quatre, en particulier trois rainures (36, 37, 38, 53, 54, 55) et, dans les secondes faces frontales (19, 47) des deux demi-coques (14, 15), deux à quatre, en particulier trois dents correspondantes (41, 42, 43, 58, 59, 60).

7. Corps porte-poils selon une des revendications précédentes, caractérisé en ce que les deux demi-coques (14, 15) peuvent être ouvertes autour de l'axe de pivotement (22) des bords intérieurs (16, 44) jusqu'à ce qu'en position ouverte maximale les deux demi-coques (14, 15) puissent être emmanchées, avec le jeu de déplacement requis, sur l'axe de rotation (8) ou sur un mandrin d'écartement (7) monté sur l'axe de rotation (8).

8. Corps porte-poils selon une des revendications précédentes, caractérisé en ce que la brosse rotative est formée d'une pluralité de demi-coques identiques (14, 15) possédant les caractéristiques définies dans les revendications précédentes.

9. Corps porte-poils selon une des revendications précédentes, caractérisé en ce que les demi-coques formant la brosse rotative sont garnies d'un grand nombre de touffes de poils (12, 13).

10. Corps porte-poils selon une des revendications précédentes, caractérisé en ce que des touffes de poils (12, 13) de différentes couleurs sont disposées en spirale sur les demi-coques (14, 15), de façon que la zone spiralée d'une demi-spire soit prévue par demi-coque (14, 15).

11. Corps porte-poils selon une des revendications précédentes, caractérisé en ce que chaque demi-coque (14, 15) est garnie de touffes de poils (12, 13) de différentes couleurs.

12. Corps porte-poils selon une des revendications précédentes, caractérisé en ce que les poils (monofilaments) peuvent être remplacés par des touffes textiles de couleur.

13. Corps porte-poils selon une des revendications précédentes, caractérisé en ce que les demi-coques (14, 15) sont garnies de fils textiles.

14. Corps porte-poils selon une des revendications précédentes, caractérisé en ce que les demi-coques (14, 15) sont garnies de bandes textiles (14, 15) .

15. Corps porte-poils selon une des revendications précédentes, caractérisé en ce que la garniture textile des demi-coques (14, 15) est de différentes couleurs.

16. Corps porte-poils selon une des revendications précédentes, caractérisé en ce que les demi-coques (14, 15) sont munies d'une garniture d'origine animale, comme par exemple de crins ou de poils.

17. Corps porte-poils selon une des revendications précédentes, caractérisé en ce que les demi-coques (14, 15) sont pourvues d'une garniture d'origine végétale.

18. Corps porte-poils selon une des revendications précédentes, caractérisé en ce que les demi-coques (14, 15) sont pourvues d'une garniture en poils métalliques.

19. Corps porte-poils selon une des revendications précédentes, caractérisé en ce que les deux demi-coques (14, 15) sont réalisées en polypropylène, en polyéthylène ou dans une autre matière thermoplastique.

20. Corps porte-poils selon une des revendications précédentes, caractérisé en ce que le mandrin d'écartement (7) solidarisé en rotation sur l'axe de rotation (8) pour recevoir les demi-coques (14, 15) est réalisé en métal ou en matière thermoplastique.
